# EUROPEAN PATENT APPLICATION

(11) **EP 2 891 706 A1**
(43) Date of publication of application: **08.07.2015**
(21) Application number: 13832594.9
(22) Date of filing: 11.01.2013
(51) Int. Cl.: C11B 3/10, A23D 9/02, B01J 20/12, C11B 3/12

(54) **METHOD FOR MANUFACTURING REFINED OIL OR FAT**

(30) Priority: 31.08.2012 JP 2012191733
(71) Applicant: The Nisshin Oillio Group, Ltd., Chuo-ku Tokyo 104-8285 (JP)
(72) Inventor: IWAMOTO, Hide, Sakai-Shi Osaka 592-8331 (JP); ARIMOTO, Shin, Selangor Darul Ehsan 42009 (MY)
(74) Representative: KATZAROV S.A.
(86) International application number: PCT/JP2013/050474
(87) International publication number: WO 2014/034154

(57) **Abstract**

Provided is a method for manufacturing refined oils and/or fats having a reduced content of glycidol, 3-chloropropane-1,2-diol and fatty acid esters thereof. The method for manufacturing refined oils and/or fats according to the present invention comprises a bleaching step of bleaching oils and/or fats from a first deodorization step with a bleaching earth having a pH of 5 to 7, and a second deodorization step of deodorizing the bleached oil from the bleaching step at 160 to 270ºC. The oils and/or fats from a first deodorization step may be any of palm oil, an oil derived from palm and a mixed oil thereof.

## Description

### TECHNICAL FIELD

The present invention relates to a method of manufacturing refined oils and/or fats.

### BACKGROUND ART

In oils and/or fats, minor components are present which are implicated in bioactivities. Such minor components include, for example, glycidol, 3-chloropropane-1,2-diol, fatty acid esters thereof and related compounds. For these components, potential nutritional problems have been pointed out. However if they are at a level where they are present in oils and/or fats such as vegetable oils that have been ingested from food and the like over many years, no direct effect on health shall occur. Accordingly, their reference intakes and the like have not been specified. Nonetheless, there is a need for oils and/or fats having higher safety. Accordingly, various types of methods for reducing the above components in oils and/or fats have been proposed.

It has been known that glycidol, 3-chloropropane-1,2-diol and related compounds are produced by, for example, deodorizing oils and/or fats under high temperature conditions in a deodorizing step. Therefore, for example, Patent Document 1 proposes a method of reducing glycidol, 3-chloropropane-1,2-diol and related compounds in oils and/or fats, the method comprising: deodorizing oils and/or fats containing glycidol, 3-chloropropane-1,2-diol and related compounds under a temperature condition as low as 100 to 240ºC.

However, a method has been desired in which the content of glycidol, 3-chloropropane-1,2-diol and related compounds in oils and/or fats can be more effectively reduced by providing a step of reducing glycidol, 3-chloropropane-1,2-diol and related compounds and precursors thereof in a deodorizing step as well as in a step other than the deodorizing step (for example, a bleaching step).

[Patent Document 1] Japanese Unexamined Patent Application, Publication No. 2011-74358

### DISCLOSURE OF THE INVENTION

### Problems to be Solved by the Invention

The present invention was made in view of the circumstances described above. An object of the invention is to provide a method for manufacturing refined oils and/or fats having a reduced content of glycidol, 3-chloropropane-1,2-diol and fatty acid esters thereof.

### Means for Solving the Problems

After conducting extensive studies to solve the above problem, the present inventors have found that the content of glycidol, 3-chloropropane-1,2-diol (hereinafter, also referred to as "3-MCPD") and fatty acid esters thereof (hereinafter, glycidol, fatty acid esters of glycidol, 3-chloropropane-1,2-diol and fatty acid esters of 3-chloropropane-1,2-diol may also be referred to as "glycidol and the like" collectively) in oils and/or fats can be effectively reduced by a combined use of a bleaching step in which a specific bleaching earth is used and a deodorization step in which deodorization is performed at a specific temperature in a method of refining oils and/or fats. Then, the present invention has been completed. Specifically, the present invention provides the followings.
(1) A method for manufacturing refined oils and/or fats, the method comprising a bleaching step of bleaching oils and/or fats from a first deodorization step with a bleaching earth having a pH of 5 to 7 and
   a second deodorization step of deodorizing the bleached oils and/or fats from the bleaching step at 160 to 270ºC.
(2) The method for manufacturing refined oils and/or fats according to (1), wherein the oils and/or fats from a first deodorization step are any of palm oil, an oil derived palm oil and a mixed oil thereof.
(3) The method for manufacturing refined oils and/or fats according to (1) or (2), wherein the second deodorization step is performed under a temperature condition of 160 to 230ºC.

### Effects of the Invention

The present invention provide a method for manufacturing refined oils and/or fats having a reduced content of glycidol, 3-chloropropane-1,2-diol and fatty acid esters thereof.

### PREFERRED MODE FOR CARRYING OUT THE INVENTION

Below, embodiments of the present invention will be described in detail. It should be noted that the term "oils and/or fats" as used herein includes a glyceride in which a glycerin is attached to 1 to 3 fatty acids through ester bonding; and includes a diglyceride (diacylglycerol) and a monoglyceride (monoacylglycerol) in addition to a triglyceride (triacylglycerol) that is a major component of oils and/or fats. In addition, oils and/or fats used in the present invention may contain components from an animal or plant oil and/or fat other than glycerides (for example, plant sterols, lecithin, antioxidative components, colorant components and the like), but at least 95% by mass of oil and/or fat components are preferably glycerides.

A method for manufacturing refined oils and/or fats according to the present invention comprises a bleaching step of bleaching oils and/or fats from a first deodorization step, and a second deodorization step. Each step and others will be described below.

### [Oils and/or fats from first deodorization step]

In the manufacturing method according to the present invention, oils and/or fats from a first deodorization step are used. The oils and/or fats from a first deodorization step refer to oils and/or fats which have been deodorized in a deodorization step at least once. For example, the oils and/or fats from a first deodorization step can be obtained by performing none or at least one step of a degumming step, a neutralizing step, a bleaching step and a dewaxing step; and a deodorization step on a crude oil. The oils and/or fats from a first deodorization step are preferably oils and/or fats from which impurities have been removed to some extent because oils and/or fats refinement efficiency in the manufacturing method according to the present invention can be improved. Oils and/or fats from which impurities have been removed to some extent include a so-called RBD oil through physically refining, a so-called NBD oil through chemical refining or the like.

There is no particular limitation for conditions in the first deodorization step, and conditions used in common methods for manufacturing oils and/or fats may be used. For example, it may be performed by contacting oils and/or fats with steam at 160 to 300ºC for 30 to 180 minutes under reduced pressure (for example, 150 to 700 Pa). In general, when a deodorization step is performed under a high temperature condition (for example, 280 to 300ºC), odor components and the like in oils and/or fats can be more reliably removed, but it is known that the content of glycidol and the like in the oils and/or fats is increased. However, according to the present invention, a bleaching step and a second deodorization step are performed under specific conditions after a first deodorization step as described below, thereby the content of glycidol and the like in oils and/or fats can be reduced. Therefore, a temperature condition in the first deodorization step can be high.

There is no particular limitation for oils and/or fats from a first deodorization step, and it may be a plant oil such as rapeseed oil, soybean oil, rice oil, safflower oil, grape oil, sunflower oil, wheat germ oil, corn oil, cotton seed oil, sesame oil, peanut oil, flax oil, perilla oil, olive oil, palm oil, coconut oil, edible fractionated oils obtained by fractionating these (palm olein, palm stearin, palm super olein, palm mid fraction and the like), or a mixed oil of two or more of these. In addition, a hydrogenated oil, a transesterified oil or the like of the oils and/or fats described above, as well as an edible oil manufactured by a direct esterification reaction (a medium chain triglyceride and the like) may be used.

Among the oils and/or fats described above, palm oil, an oils and/or fats derived from palm (which is hereinafter referred to as "an oil derived from palm", and specifically means a fractionated oil of palm oil such as palm olein, palm stearin, palm super olein, palm mid fraction and the like) and a mixed oil thereof are preferred. These oils and/or fats have a high content of diacylglycerol in the oils and/or fats, and thus glycidol and the like are thought to be readily generated in the oils and/or fats. Therefore, when these oils and/or fats are used as oils and/or fats from a first deodorization step, refined oils and/or fats having an effectively reduced content of glycidol and the like can be obtained.

### [Bleaching step]

In the bleaching step according to the present invention, oils and/or fats from a first deodorization step is bleached with a bleaching earth having a pH of 5 to 7. When such a bleaching earth is used in the bleaching step, glycidol and the like and precursors thereof in oils and/or fats can be adsorbed, and/or the production of glycidol and the like in the oils and/or fats can be suppressed. Therefore, the content of glycidol and the like in the oils and/or fats can be reduced.

There is no particular limitation for the amount of a bleaching earth used in the bleaching step, and it may be, for example, 0.1% by mass to 10.0% by mass, 0.5% by mass to 5.0% by mass, 0.5% by mass to 3.0% by mass relative to the amount of oils and/or fats. When a more amount of a bleaching earth is used, the effect of decreasing glycidol and the like in oils and/or fats is higher. However, even when a smaller amount of the bleaching earth is used, the content of glycidol and the like in the oils and/or fats can be reduced by decreasing a deodorization temperature in a second deodorization step described below. When an excessive amount of a bleaching earth used in the bleaching step, the effect of decreasing glycidol and the like in oils and/or fats may not be easily enhanced above a certain level. Therefore, the amount of the bleaching earth used need not be in excess in the bleaching step.

There is no particular limitation for the method of bleaching oils and/or fats in the bleaching step, and it may be a method used in common methods for manufacturing oils and/or fats. For example, a bleaching earth may be added to oils and/or fats, and then the oils and/or fats may be heated with stirring under reduced pressure at 80 to 150ºC for 5 to 60 minutes in the presence of the bleaching earth. Alternatively, a filter or a column may be filled with a bleaching earth, and then oils and/or fats may be passed therethrough. After competition of bleaching, the bleaching earth can be removed from the oils and/or fats by filtration and the like to obtain a bleached oil from the bleaching step.

### [Second deodorization step]

A bleached oil from the bleaching step is deodorized in a second deodorization step. A temperature condition in the second deodorization step is 160 to 270ºC. In the present invention, the content of glycidol and the like in oils and/or fats has been reduced in the bleaching step as described above, and an odor component and the like can be removed while suppressing an increase in glycidol and the like by further performing deodorization in the second deodorization step at the temperature described above. Therefore, refined oils and/or fats having a favorable flavor and a reduced content of glycidol and the like can be obtained. A temperature condition in the second deodorization step is preferably 160 to 260ºC, more preferably 160 to 230ºC since an increase in glycidol and the like can be suppressed under a lower-temperature condition.

There is no particular limitation for conditions other than the temperature condition in the second deodorization step, and they may be those used in common methods for manufacturing oils and/or fats. For example, oils and/or fats is contacted with steam during a deodorization time of 30 to 180 minutes under reduced pressure (for example, 150 to 700 Pa). The deodorization time may be a consecutive period of time or a nonconsecutive period of time. A low temperature condition in the second deodorization step can effectively suppress an increase in glycidol and the like in oils and/or fats even when the deodorization time is short.

### [Determination of the content of glycidol and the like in refined oils and/or fats]

According to the manufacturing method of the present invention, refined oils and/or fats having a reduced content of glycidol and the like can be obtained. Whether or not the content of glycidol and the like in oils and/or fats is reduced may be determined by the following method.

The content of glycidol, fatty acid esters of glycidol, 3-MCPD and fatty acid esters of 3-MCPD in refined oils and/or fats is determined as an "MCPD-FS value" in which the total amount of the above four components is converted into an equivalent amount of free 3-MCPD in accordance with the DGF Standard Methods (the DGF Standard Methods C-III 18 (09)).

Specifically, an internal standard and then a methanol solution of a sodium methoxide are added to refined oils and/or fats. Then a reaction is allowed at room temperature for degradation through ester saponification. Next, an aqueous sodium chloride containing a trace amount of acetic acid, and hexane are added thereto and mixed, and then hexane is removed. It should be noted that at that time, glycidol is converted into 3-MCPD, and fatty acid esters of glycidol are converted into 3-MCPD upon the cleavage of the ester bond. Then, derivatization with aqueous phenylboric acid and subsequent extraction with hexane are performed. Then measurements are performed with a gas chromatography-mass spectrometry system. Then, using a chromatogram obtained from the measurements with the gas chromatography-mass spectrometry system, the total amount of 3-MCPD, fatty acid esters of 3-MCPD, glycidol and fatty acid esters of glycidol in oils and/or fats is calculated as free 3-MCPD equivalence by comparing the ionic strength of 3-MCPD with that of the internal standard.

The content of 3-MCPD and fatty acid esters of 3-MCPD in refined oils and/or fats is determined as a "True MCPD value" in which the total amount of the above two components is converted into the amount of free 3-MCPD using a modified version of the DGF Standard Methods (DGF Standard Methods C-III 18 (09)).

Specifically, an internal standard and then sodium methoxide in methanol are added to refined oils and/or fats. Then a reaction is allowed at room temperature for degradation through ester saponification. Next, an aqueous sodium bromide containing a trace amount of acetic acid, and hexane are added thereto and mixed, and then the hexane is removed. It should be noted that at that time, 3-MCPD and fatty acid esters of 3-MCPD are completely converted into free 3-MCPD. Then, derivatization with phenylboric acid and subsequent extraction with hexane are performed. Then measurements are performed with a gas chromatography-mass spectrometry system. Then, using a chromatogram obtained from the measurements with the gas chromatography-mass spectrometry system, the total amount of 3-MCPD and fatty acid esters of 3-MCPD in oils and/or fats is calculated as free 3-MCPD equivalence by comparing the ionic strength of 3-MCPD with that of the internal standard.

### EXAMPLES

Below, the present invention is further described in detail with reference to Examples, but the present invention shall not, in any way, be limited to these.

RBD palm oil (Intercontinental Specialty Fats Sdn., Bhd; palm oil from a first deodorizing step which has been deodorized at 260ºC for 90 minutes under reduced pressure) in an amount of 1.2 kg was bleached in the presence of a bleaching earth shown in Table 1 at 110ºC under reduced pressure by stirring the oils and/or fats for 20 minutes. The resulting oils and/or fats were cooled, and filtered to remove the bleaching earth. Then a bleached palm oil from a bleaching step was obtained.

The bleaching earths shown in Table 1 are detailed as follows.

Super A (acidic bleaching earth; pH: 6.05), Wantotik Clay Products Sdn Bhd.

Galleon Earth V2 (activated bleaching earth; pH: 2.5 to 3.5), Mizusawa Industrial Chemicals, Ltd.

The resulting bleached palm oil in an amount of 500 g was heated with blowing steam at a deodorization temperature shown in Table 1 under reduced pressure (130 to 260 Pa) for a deodorization time shown in Table 1 to obtain a palm oil from a second deodorization step (hereinafter referred to as a "refined oils and/or fats"). It should be noted that the amount of blowing steam was about 2.3% by mass relative to the bleached palm oil.

### [Quantitative determination of MCPD-FS values (the total Amount of 3-MCPD, fatty acid esters of 3-MCPD, glycidol and fatty acid esters of glycidol)]

Quantitative determination of 3-MCPD, fatty acid esters of 3-MCPD, glycidol and fatty acid esters of glycidol in each refined oils and/or fats was performed in accordance with the DGF Standard Methods (DGF Standard Methods C-III 18 (09)).

Specifically, 50 µL of an internal standard (3-MCPD-d5: a 20 µg/mL solution) and then 1 mL of a sodium methoxide solution (0.5 mol/L in methanol) were added to 100 mg of each refined oils and/or fats. Then a reaction was allowed at room temperature for degradation through ester saponification. Next, 3 mL of an aqueous sodium chloride (20%) containing a trace amount of acetic acid and 3 mL of hexane were added thereto and mixed, and then hexane was removed. Subsequently, derivatization with 250 µL of an aqueous phenylboric acid (25%) and subsequent extraction with 2 mL of hexane were performed. Then measurements were performed with a gas chromatography-mass spectrometry system.

Using a chromatogram obtained from the measurements with the gas chromatography-mass spectrometry system, the total amount of 3-MCPD, fatty acid esters of 3-MCPD, glycidol and fatty acid esters of glycidol in oils and/or fats was calculated as free 3-MCPD equivalence by comparing the ionic strength of 3-MCPD with that of the internal standard, 3-MCPD-d5. The results are shown under the "MCPD-FS value" in Table 1.

### [Quantitative determination of True MCPD values (the total amount of 3-MCPD and fatty acid esters of 3-MCPD)]

Quantitative determination of 3-MCPD and fatty acid esters of 3-MCPD in each refined oils and/or fats was performed in accordance with a modified version of the DGF Standard Methods (DGF Standard Methods C-III 18 (09)).

Specifically, 50 µL of an internal standard (3-MCPD-d5: a 20 µg/mL solution) and then 1 mL of a sodium methoxide solution (0.5 mol/L in methanol) were added to 100 mg of each refined oils and/or fats. Then a reaction was allowed at room temperature for degradation through ester saponification. Next, 3 mL of an aqueous sodium bromide (50%) containing a trace amount of acetic acid and 3 mL of hexane were added thereto and mixed, then hexane was removed. Subsequently, derivatization with 500 µL of an aqueous phenylboric acid (12.5%) and subsequent extraction with 2 mL of hexane are performed. Then measurements were performed with a gas chromatography-mass spectrometry system.

Using a chromatogram obtained from the measurements with the gas chromatography-mass spectroscopy system, the total amount of 3-MCPD and fatty acid esters of 3-MCPD in a glyceride composition was calculated as free 3-MCPD equivalence by comparing the ionic strengths of 3-MCPD with that of the internal standard, 3-MCPD-d5. The results are shown under the "True MCPD value" in Table 1.

**[Table 1]**

| Table 1 | | | | | | | |
|---|---|---|---|---|---|---|---|
| | Example 1 | Example 2 | Example 3 | Example 4 | Example 5 | Comparative Example 1 | Comparative Example 2 |
| Bleaching earth added | Super A | | | | | None | Galleon earth V2 |
| Added amount of bleaching earth (% by mass) | 2.00 | | 1.00 | | 1.50 | - | 1.50 |
| Deodorization temperature | 230°C | 260°C | 230°C | 260°C | 180°C | - | 260°C |
| Deodorization time | 90 minutes | 90 minutes | 90 minutes | 90 minutes | 60 minutes | - | 90 minutes |
| MCPD-PS value (ppm) | 1.5 | 2.8 | 1.7 | 2.4 | 1.1 | 10.8 | 8.5 |
| True MCPD value (ppm) | 0.6 | 0.8 | 1 | 0.8 | 0.8 | 0.8 | 1.1 |

As shown in Table 1, the refined oils and/or fats obtained by the manufacturing method according to the present invention showed reduced MCPD-FS values and True MCPD values. That is, the refined oils and/or fats obtained by the manufacturing method according to the present invention were found to have a reduced content of glycidol, 3-chloropropane-1,2-diol and fatty acid esters thereof. In particular, the content of glycidol and fatty acid esters thereof was significantly reduced. In addition, as shown in Example 5, when deodorization was performed at 180ºC in the second deodorization step, the content of the above components was allowed to be efficiently reduced in a short deodorization time.

## Claims

1. A method for manufacturing refined oils and/or fats, the method comprising a bleaching step of bleaching oils and/or fats from a first deodorization step with a bleaching earth having a pH of 5 to 7 and
a second deodorization step of deodorizing the bleached oil and/or fats from the bleaching step at 160 to 270ºC.

2. The method for manufacturing refined oils and/or fats according to claim 1, wherein the oils and/or fats from a first deodorization step are any of palm oil, an oil derived palm oil and a mixed oil thereof.

3. The method for manufacturing refined oils and/or fats according to claim 1 or 2, wherein the second deodorization step is performed under a temperature condition of 160 to 230ºC.

## Amended claims

### Amended claims under Art. 19.1 PCT

**1.** A method for manufacturing refined oils and/or fats, the method comprising a bleaching step of bleaching oils and/or fats from a first deodorization step with a bleaching earth having a pH of 5 to 7 and
a second deodorization step of deodorizing the bleached oil and/or fats from the bleaching step at 160 to 270ºC,
wherein the oils and/or fats from a first deodorization step are any of palm oil, an oil derived palm oil and a mixed oil thereof,
wherein the amount of a bleaching earth used in the bleaching step is 1.0% by mass to 5.0% by mass relative to the amount of oils and/or fats.

**2.** The method for manufacturing refined oils and/or fats according to claim 1, wherein the second deodorization step is performed under a temperature condition of 160 to 230ºC.
